# EUROPEAN PATENT APPLICATION

(11) **EP 4 376 258 A1**
(43) Date of publication of application: **29.05.2024**
(21) Application number: 21951025.2
(22) Date of filing: 15.09.2021
(51) Int. Cl.: H02J 50/00, H02J 50/40, H02J 50/90, H02J 50/10, H02J 50/12, H02J 7/00, H01R 24/60, G10L 15/22

(54) **WIRELESS CHARGING DEVICE CUSTOMIZABLE ACCORDING TO NEEDS OF USER**

(30) Priority: 23.07.2021 KR 20210096891
(71) Applicant: Byeon, Cheol Won, Gwangju 61438 (KR)
(72) Inventor: Byeon, Cheol Won, Gwangju 61438 (KR)
(74) Representative: Frenkel, Matthias Alexander
(86) International application number: PCT/KR2021/012635
(87) International publication number: WO 2023/003077

(57) **Abstract**

The present invention relates to a wireless charging device comprising a charging station block which is provided, on one side, with a charging unit and charges, via the charging unit, an apparatus that is in close contact with the charging station block or spaced a certain distance therefrom. The charging station block has at least one connection portion formed on one side, and a plurality of the charging station blocks can be coupled to each other via the connection portion or decoupled from each other.

## Description

### TECHNICAL FIELD

The present disclosure relates to a wireless charging device customizable according to needs of a user, and more particularly, to a wireless charging device which allows the user to customize it according to the user's needs by manufacturing the wireless charging device as a block.

### BACKGRUOUND

Wireless charging is a mode that can charge electronic apparatuses wirelessly without transmitting current by wire using a charging cable. The wireless charging was theoretically established by Nikola Tesla around 1890. However, the wireless charging did not receive much attention because power loss was so large during the process of converting the current into electromagnetism and transmitting the electromagnetism. About 100 years later, around 2000, the wireless charging received attention again and gradually emerged as a commercial product.

In recent years, as the number of devices which are wirelessly chargeable increases in everyday life, such as starting practically grafting the wireless charging with smart apparatuses such as wireless earphones and smart watches from starting grafting the wireless charging with smartphones, the demand for wireless chargers is also rapidly increasing.

Since the wireless chargers on the market to date are released as finished products, user customization is not possible, and a charging unit is also standardized so that it is impossible to reduce or enlarge the charging unit. Therefore, even if a user owns a large number of electronic devices that support wireless charging, there is the inconvenience of having to separately purchase a suitable wireless charging device just because the user owns electronic apparatuses of different sizes and different output requirements.

The present disclosure is to reduce the inconvenience and allow each user to assemble and use his/her own wireless charging station or wireless charging device to suit purposes and needs of the user.

### SUMMARY

The present disclosure relates to a wireless charging device comprising a charging station block which is provided, on one side, with a charging unit and charges, via the charging unit, at least one apparatus that is in close contact with the charging station block or spaced a certain distance therefrom, in which the charging station block has at least one connection portion formed on one side, and a plurality of charging station blocks can be coupled to each other via the connection portion or decoupled from each other.

Here, least one connection portion may be formed as at least one of magnetic coupling, a hook and locking ring form, a clip form, a jigsaw puzzle form, an insert coupling form, and a snap button-based fitting coupling form.

Further, the charging station block may be provided in a circular or polygonal shape in a plan view, and the plurality of the charging station blocks can be coupled in the form of a right angle or a straight line through the connection portion.

Further, in a state in which the plurality of charging station blocks are coupled, at least one charging station block may form different operation groups, and according to the different operation groups, at least one of the output amount, output amplification, and a charging operation may be different.

Moreover, the charging station block may further include a control unit controlling the charging unit therein, and the control unit may learn device information on at least one apparatus, and the type and the state of at least one device when at least one is charged, state confirmation, induction of a charging location which locates a device in the charging unit, and an output amount of optimal battery conservation and device preservation is controlled based on the learning.

Further, the control unit may adjust an output amount for charging an apparatus by controlling the charging units provided in the plurality of charging station blocks, and individually turn on/off the plurality of charging station blocks.

Furthermore, the wireless charging device may further include a voice recognition unit provided on one side of the inside or outside of the charging station block, and recognizing a voice, and the voice recognition unit may recognize the voice of the user, and determine the control of the charging station block requested by the user, and transfer the determined control to the control unit.

Further, the plurality of charging station blocks may be coupled, and provided on a wall or a floor of a predetermined space, and apparatuses positioned inside the predetermined space may be wirelessly charged.

In addition, the predetermined space may be a building, the charging station block may be installed or buried in at least one of the wall and the floor of the building, and the charging station block may wirelessly charge apparatuses positioned therein.

Moreover, the predetermined space may be a parking lot, the charging station block may be installed or buried in at least one of the wall and the floor of the parking lot, and the charging station block may wirelessly charge apparatuses positioned therein.

Moreover, a charging assistance means may be coupled to one side of the charging station block, and the charging assistance means may hold an apparatus charged by the charging station block or expands an area capable of charging the device.

Furthermore, the wireless charging device may further include a display unit displaying an operation of the charging station block on one side of the charging station block, and the display unit may display whether at least one charging station block is abnormal in the state in which the plurality of charging station blocks are coupled, and the charging station block is connected to a user terminal by wire or wirelessly, and the display unit may adjust an output displayed by the display unit based on the control of the user terminal.

Furthermore, the wireless charging device may further include a sound output unit provided on one side of the inside or outside of the charging station block, and notifying charging or an abnormal operation of the charging station block by outputting a sound, and the sound output unit may differently adjust the type of sound or a pattern of the sound by external control.

Moreover, the wireless charging device may further include a location confirmation unit provided on one side of the inside or outside of the charging station block, and the location confirmation unit may transmit location information of the charging station to the user terminal connected to the charging station block to confirm the location of the charging station block in the user terminal.

Further, a power reception unit provided in the charging station block may receive power from heterogeneous wireless charging devices, and the charging unit may charge an apparatus which the charging station block is facing with the received power.

### BRIEF DESCRIPTION OF THE DRAWINGS

FIG. 1 is a perspective view of a wireless charging device according to an embodiment of the present disclosure.
FIG. 2 is a block diagram of the wireless charging device according to an embodiment of the present disclosure.
FIG. 3 is a diagram schematically illustrating that the wireless charging device is coupled or decoupled according to an embodiment of the present disclosure.
FIG. 4 is a diagram schematically illustrating that a charging station block is provided in various forms in the wireless charging device according to an embodiment of the present disclosure.
FIG. 5 is a diagram schematically illustrating that a charging station block is provided in various forms in the wireless charging device according to an embodiment of the present disclosure.
FIG. 6 is a diagram schematically illustrating that a charging assistance means is provided in the charging station block to assist charging in the wireless charging device according to an embodiment of the present disclosure.
FIG. 7 is a diagram schematically illustrating that a charging assistance means is provided in the charging station block to assist charging in the wireless charging device according to an embodiment of the present disclosure.
FIG. 8 is a diagram schematically illustrating that the wireless charging device is provided in a predetermined space to charge various apparatuses in the wireless charging device according to an embodiment of the present disclosure.
FIG. 9 is a diagram schematically illustrating that the wireless charging device is provided in a parking zone to charge a vehicle in the wireless charging device according to an embodiment of the present disclosure.

### DESCRIPTION OF EMBODIMENTS

Hereinafter, preferred embodiments of the present disclosure will be described in detail with reference to the accompanying drawings. However, some components that are unrelated to the gist of the present disclosure will be omitted or compressed, but the omitted components are not necessarily components that are unnecessary in the present disclosure, and may be used in combination by those skilled in the art to which the present disclosure pertains.

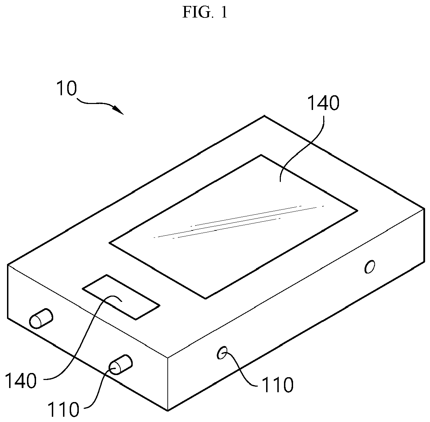

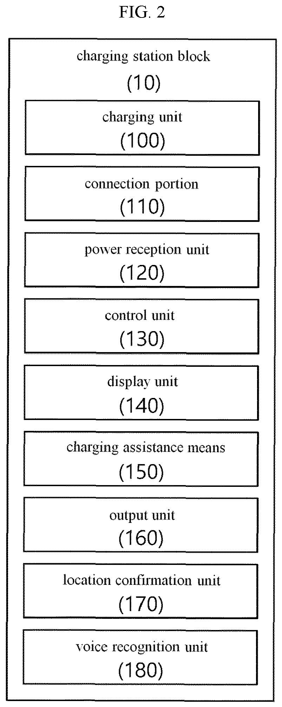

FIG. 1 is a perspective view of a wireless charging device according to an embodiment of the present disclosure and FIG. 2 is a block diagram of the wireless charging device according to an embodiment of the present disclosure.

As illustrated in FIGS. 1 and 2, the wireless charging device according to an embodiment of the present disclosure includes a charging station block 10.

The charging station block 10 is a component that wirelessly charges power to an external apparatus while the external apparatus is held. The charging station block 10 has an upper surface and a lower surface in a circular or polygonal shape. Additionally, the charging station block 10 may be provided in a folding type, a holding type, a stand type, a slide type, or a folder type. In addition, the charging station block 10 is configured to be flexible to be rolled in a roll type, and may also be provided as a cover or an insertion type. The charging station block 10 may charge the apparatus while being in contact with the apparatus or spaced from the apparatus by a predetermined distance. To this end, the charging station block 10 may receive power from the outside, store the power, and then operate to charge the power of the apparatus, and may also receive the power in real time while being connected to an external power supply device, and operate to charge the power of the apparatus. Further, the charging station block 10 may include a separate waterproofing means to be waterproof. This charging station block 10 may include a charging unit 100, a connection portion 110, a power reception unit 120, a control unit 130, a display unit 140, a charging assistance means 150, and a sound output unit 160.

The charging unit 100 is a component that charges the power of an apparatus held on the charging station block 10. The charging unit 100 may be provided inside the charging station block 10. At this time, a charging mode of the charging unit 100 may be a magnetic induction mode or a resonance induction mode. Here, since the magnetic induction mode or the resonance induction mode is known technology, a detailed description will be omitted.

At least one connection portion 110 is formed on one side of the charging station block 10 to enable different charging station blocks 10 to be coupled to each other. The connection portion 110 may be formed on the side of the charging station block 10, for example. Here, the connection portion 110 may be used variously as long as the connection portion 110 may connect different charging station blocks 10. Accordingly, the plurality of charging station blocks 10 are connected to each other by the connecting portion 110, so that it is possible to customize the charging station blocks 10 in a form desired by the user.

The power reception unit 120 is a component through which the charging station block 10 receives the power from the outside. The power reception unit 120 may also be integrated and provided on one side of the charging station block 10 in the form of an outlet. Accordingly, power may be supplied to the charging station block 10 by inserting a plug of an external power supply device. Conversely, the power reception unit 120 is provided in the form of the plug and inserted into the outlet of the external power supply device to supply the power to the charging station block 10. Further, the power reception unit 120 is provided in the form of a USB terminal and the USB terminal is coupled to a power supply device, so the power may also be supplied. And the USB terminal is connected to a separate adapter and the adapter is coupled to the power supply device, so the power may also be supplied. Further, the power may also be supplied by directly connecting wires through wiring work. The power supplied by the power reception unit 120 may be stored inside the charging station block 10 and used to charge the apparatus, or the power supplied by the power reception unit 120 may be supplied to the apparatus by the charging unit 100 in real time to charge the apparatus.

The control unit 130 is a component that is provided inside the charging station block 10 and controls an operation of the charging station block 10. The control unit 130 may adjust an output amount by which the charging unit 100 charges the apparatus. Moreover, the control unit 130 may control information displayed in the display unit 140 provided on the surface of the charging station block 10.

The display unit 140 is a component that is provided on an external surface of the charging station block 10 and displays an operation state of the charging station block 10. The display unit 140 is provided as a display and may display whether the operation state of the charging station block 10 is currently normal or has an error. Additionally, the display unit 140 may be provided as an LED and may also display the operation state of the charging station block 10 as the LED emits light. In addition, the display unit 140 may also display a charging station block 10 that does not operate normally among the plurality of charging station blocks 10 while the plurality of charging station blocks 10 are coupled. In addition, while the charging station block 10 is connected to a user terminal by wire or wirelessly, the display unit 140 may adjust the displayed output according to the control of the user terminal. The output may be adjusted to display the operation state, etc.

The charging assistance means 150 is a component that is provided on one side of the charging station block 10 to assist holding the apparatus being charged by the charging station block 10. The charging assistance means 150 may be provided in the folding type, the holding type, the stand type, the slide type, or the folder type. In addition, the charging assistance means 150 is configured to be flexible to be rolled in a roll type, and may also be provided as a cover or an insertion type. In addition, the charging assistance means 150 enables waterproofing, power passage, voltage transformation, power increase/decrease, wire connection. Also, the charging assistance means 150 enables coupling of the charging station block 10 with another charging assistance means 150.

The sound output unit 160 is a component that is provided on one side of the inside or outside of the charging station block 10 and performs notification about charging or an abnormal operation of the charging station block 10. With respect to a sound output by the sound output unit 160, the output sound may be changed or a pattern of the sound may be adjusted by controlling the user terminal or the charging station block 10.

A location confirmation unit 170 is a component that is provided on one side of the inside or outside of the charging station block, and transmits location information of the charging station to the user terminal connected to the charging station block to allow the user terminal to confirm a location of the charging station block. The location confirmation unit 170 is provided as a GPS transmitter and receives GPS information in the user terminal to determine a real-time location or a last confirmed location of the location confirmation unit 170.

A voice recognition unit 180 is a component that is provided on one side of the inside or outside of the charging station block 10, and determines the control of the charging station block 10 requested by the user by recognizing a voice of the user. When the voice of the user is input, the voice recognition unit 180 interprets an analog type voice of the user, and determines an input code indicated by the user, and then transfers the input code to the control unit 130. That is, the input code is a code indicating which service item a voice spoken by the user relates to by the voice recognition unit 180, and the voice recognition unit 180 may serve to determine and transfer the input code. For example, the voice recognition unit 180 may detect start and end points of an input voice signal and extract a feature of the detected voice signal. Here, amplification of the input voice signal and a filtering process to remove noise outside an audible frequency band may be included. Thereafter, extracted feature data is compared with a voice data code prestored in a database (not illustrated) to determine a most similar voice data code. Here, the feature data may mean a general "feature parameter" used in voice recognition technology. In addition, the input code corresponding to the determined voice data code may be determined and transferred to the control unit 130. Further, the voice recognition unit 180 may perform voice recognition by learning the voice of the user. In this case, the voice recognition unit 180 may input a large amount of voice and a text represented by the voice into a learning machine as a pair, and generate a learning model. Afterwards, when voice information is input into the learning model, a text corresponding to the voice information is returned. Such a structure may use Recurrent Neural Networks (RNN) which is a recurrent neural network that may handle data of a variable length during deep learning. The RNN is connected so that a result of a hidden layer goes back into the input of the same hidden layer. The characteristics allow the RNN to have a feature that may consider an aspect of order or time. The RNN is helpful in handling sequence data because the RNN has a feature of being able to perform determination by considering the order aspect. A representative form of sequence data is data such as 'sentence'. A word of sentence may not interpret a meaning only with a current word, but interpret the meaning of the current word through a relationship with a previous word. Besides, the RNN may be used to process array or time series data such as genes, handwriting, voice signals, data detected by sensors, stock prices, or time-series data.

Hereinafter, it will be schematically described that the charging station block 10 is coupled or decoupled with reference to drawings.

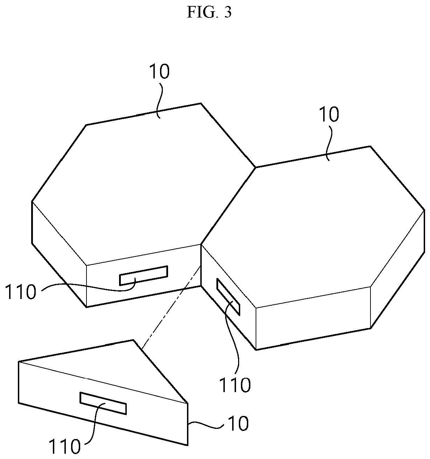

FIG. 3 is a diagram schematically illustrating that the wireless charging device is coupled or decoupled according to an embodiment of the present disclosure.

As illustrated in FIG. 3, in the wireless charging device according to an embodiment of the present disclosure, a plurality of charging station blocks 10 are enabled to be coupled, and as a result, the user may customize the wireless charging device in a form desired thereby.

For example, the connection portion 110 may have a magnetic area formed to be coupled by magnetic force. As a result, the user can couple the plurality of charging station blocks 10 by aligning the magnetic areas formed in each of them with each other, and can disconnect the plurality of charging station blocks 10 by separating the magnetic areas from each other.

Further, the connection portion 110 may be provided in a ring shape. That is, in some of the plurality of charging station blocks 10, the connection portion 110 may be formed in the form of a locking ring, and in other some, the connection portion 110 may be formed in the form of a hook. Therefore, the charging station block 10 provided with the hook-shaped connection portion 110 is locked on the charging station block 10 provided with a locking ring-shaped connection portion 110, so that the plurality of charging station blocks 10 may be coupled.

In addition, the connection portion 110 may be provided in the same form as a protruding portion of a puzzle piece and a concave portion that accommodates the protruding portion. That is, the plurality of charging station blocks 10 may be provided in the same form as one puzzle piece in a jigsaw puzzle, and in this case, the connection portion 110 may be provided as a protruding portion formed in the puzzle piece, and a concave portion that accommodates the protruding portion. Accordingly, a plurality of different charging station blocks 10 may be coupled to each other by fitting the protruding portion and the concave portion accommodating the protruding portion.

In addition, the connection portion 110 is provided to be inserted into a hole formed with a predetermined size, so that the plurality of charging station blocks 10 may be coupled to each other. That is, in some of the charging station blocks 10, the holes formed with a predetermined size may be formed as the connection portion 110, and some may be provided with snap buttons coupled to the holes. Accordingly, the charging station block 10 with the snap buttons is coupled to the charging station block 10 with the hole formed with the predetermined size to couple the plurality of charging station blocks 10 to each other.

Further, the connection portion 110 may be provided as a clip and a form of accommodating the clip. That is, in some of the plurality of charging station blocks 10, the clip may be provided as the connection portion 110, and in other some, a clip accommodation portion having a predetermined space may be formed to be fitted with the clip as the connection portion 110. Accordingly, the clip-type connection portion 110 is fitted into the clip accommodation-type connection portion 110 having the predetermined space to couple the plurality of charging station blocks 10 to each other.

Further, the connection portion 110 may be provided to be inserted. That is, the connection part 110 has a predetermined space to be inserted into the charging station block 10, so that another charging station block 10 may be inserted and accommodated in the connection portion 110. Accordingly, the plurality of charging station blocks 10 may be coupled to each other.

Hereinafter, it will be described that the charging station block 10 is provided in various forms with reference to drawings.

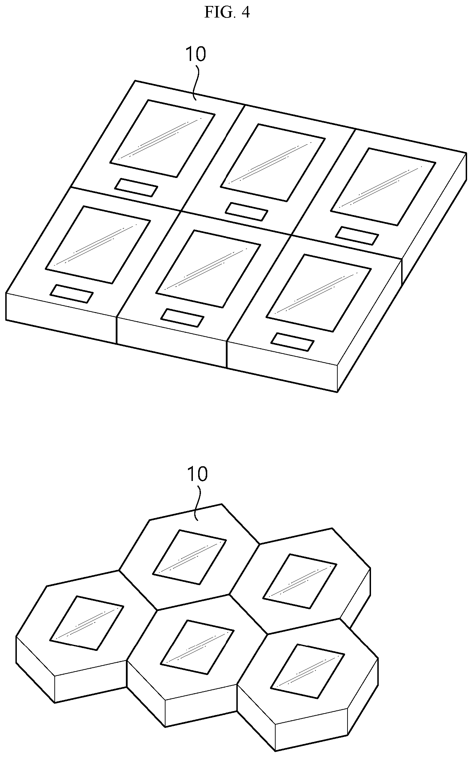

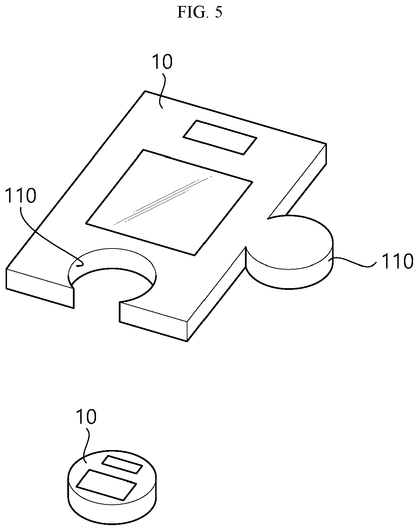

FIG. 4 is a diagram schematically illustrating that a charging station block 10 is provided in various forms in the wireless charging device according to an embodiment of the present disclosure and FIG. 5 is a diagram schematically illustrating that a charging station block 10 is provided in various forms in the wireless charging device according to an embodiment of the present disclosure.

As illustrated in FIGS. 4 and 5, in the wireless charging device according to the present disclosure, the charging station block 10 may be formed in a polygonal shape such as a quadrangle, triangle, or hexagon, or in a circular shape.

Specifically, the charging station block 10 may be quadrangle, triangular, or hexagonal in shape when viewed from a plan view. Additionally, the charging station block 10 may also be formed in the form of the puzzle piece, such as the jigsaw puzzle. Accordingly, two charging station blocks 10 formed in a hexagon and one charging station block 10 formed in a triangle may be coupled to the charging station block 10 having a predetermined area.

Further, the charging station block 10 is also possible to be formed as a folding or stand type. Accordingly, the foldable type charging station block 10 or the stand type charging station block 10 may also be used while being coupled to a circular or polygonal charging station block 10.

Through the connection portion 110, the plurality of charging station blocks 10 may be customized and used according to the user's convenience or a charging environment.

For example, the plurality of charging station blocks 10 may be coupled and used in a straight line. Accordingly, a plurality of apparatuses may be held one after another on the charging station blocks 10 that are coupled in the straight line to charge the devices.

Further, the charging station block 10 is also possible to be coupled in the form of a right angle. In other words, the plurality of charging station blocks 10 are coupled in the form of the right angle according to the charging environment. Accordingly, the plurality of apparatuses may be held one after another along the charging station block 10 that is connected in the form of the right angle to charge the apparatuses.

Therefore, in the present disclosure, the plurality of charging station blocks 10 may be easily customized and coupled according to the charging environment, thereby enhancing user convenience. In addition, since the user may couple the plurality of charging station blocks 10 according to his or her preference, there is the effect of using a wireless charging device that not only provides convenience of use but also has a beautiful appearance.

Hereinafter, further improving the charging environment using the charging assistance means 150 will be described.

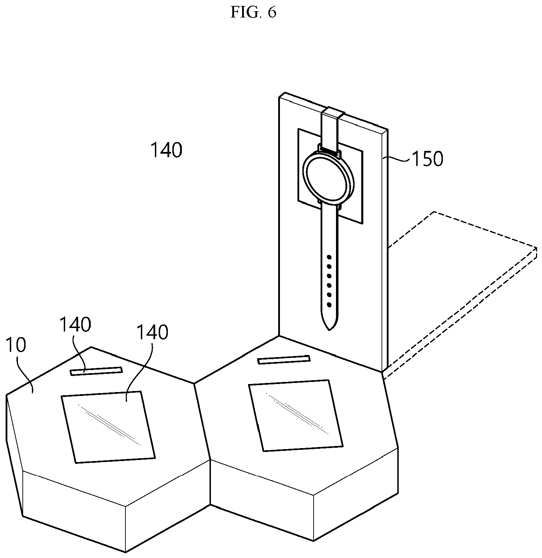

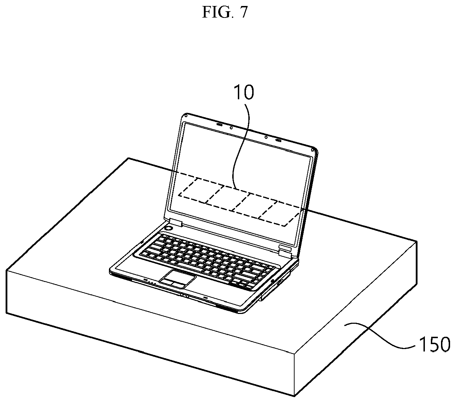

FIG. 6 is a diagram schematically illustrating that a charging assistance means 150 is provided in the charging station block 10 to assist charging in the wireless charging device according to an embodiment of the present disclosure and FIG. 7 is a diagram schematically illustrating that a charging assistance means 150 is provided in the charging station block 10 to assist charging in the wireless charging device according to an embodiment of the present disclosure.

As illustrated in FIGS. 6 and 7, in the present disclosure, not only a plurality of charging station blocks 10 are coupled, but a charging assistance means 150 is additionally coupled to provide convenience to the user during wireless charging.

Specifically, in FIG. 6, the charging assistance means 150 is a component that is provided on one side of the charging station block 10 to assist holding the apparatus being charged by the charging station block 10. The charging assistance means 150 may be provided in the folding type, the holding type, the stand type, the slide type, or the folder type. In addition, the charging assistance means 150 is configured to be flexible to be rolled in a roll type, and may also be provided as a cover or an insertion type.

For example, the charging assistance means 150 may be coupled to one side of a hexagonal charging station block 10. The charging assistance means 150 may be formed in a foldable form. Therefore, if the user charges a watch, the user folds the charging assistance means 150 coupled to the charging station block 10 at 90 degrees, and then holds the watch on the charging assistance means 150 to easily charge the watch with power wirelessly. At this time, the charging assistance means 150 transfers the power output from the charging station block 10 to the watch, so that the watch may be charged wirelessly. To this end, a separate charging unit 100 may also be provided in the charging assistance means 150. As a result, a charging area for charging apparatuses may be expanded from the charging station block 10 to the charging assistance means 150.

Further, as in FIG. 7, while a laptop is held on the charging assistance means 150, the charging assistance means 150 may charge the laptop. In other words, the plurality of charging station blocks 10 may be mounted on one side of the charging assistance means 150, and the charging assistance means 150 transfers the power output from the charging station block 10 to the laptop to charge the laptop.

The plurality of charging assistance means 150 may be used while being coupled to one charging station block 10, and may be coupled to all of the plurality of coupled charging station blocks 10, respectively to be used by not only holding the apparatus but also expanding the charging area. Accordingly, the user may customize the wireless charging device to suit his/her convenience by coupling not only the charging station block 10 but also the charging assistance means 150 in plural.

Hereinafter, it will be described that the wireless charging devices are provided in various spaces to charge various apparatuses.

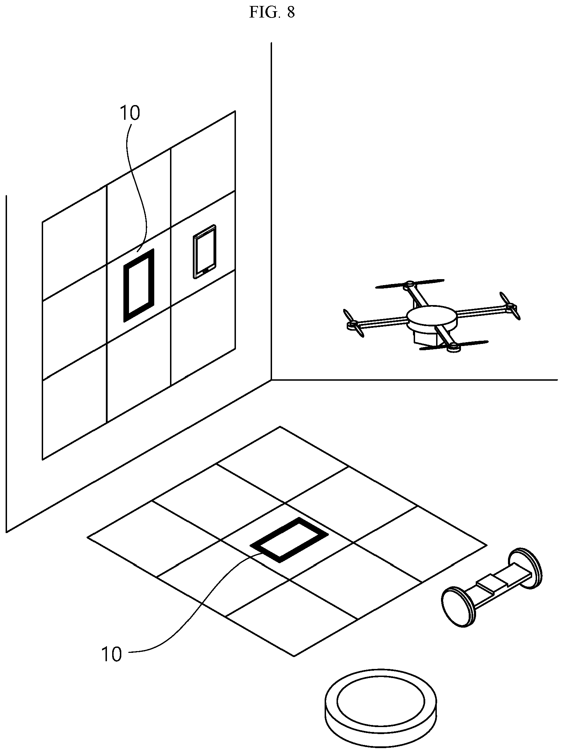

FIG. 8 is a diagram schematically illustrating that the wireless charging device is provided in a predetermined space to charge various apparatuses in the wireless charging device according to an embodiment of the present disclosure.

As illustrated in FIG. 8, the wireless charging device according to the present disclosure is provided inside a predetermined space, such as a building or a house to wirelessly charge apparatuses positioned inside the predetermined space.

For example, exterior and interior materials used for building walls and floors may be equipped with a wireless charging device in which multiple charging station blocks 10 are coupled. Accordingly, multiple apparatuses which operate inside a building, such as smartphones, robot vacuum cleaners, and drones, may be charged with power from multiple wireless charging devices in which multiple charging station blocks 10 are coupled to walls or floors inside the building. Further, it is also possible to charge the power by connecting apparatuses to the wireless charging device by wire in addition to wireless charging.

That is, the charging station block 10 has a wireless charging induction function to induce charging, movement, and holding directions of apparatuses that support the wireless charging, such as drones, mobile toys, robot vacuum cleaners, two-or four-wheeled vehicles, electric kickboards, electric wheels, and electric wheelchairs, and charge the devices.

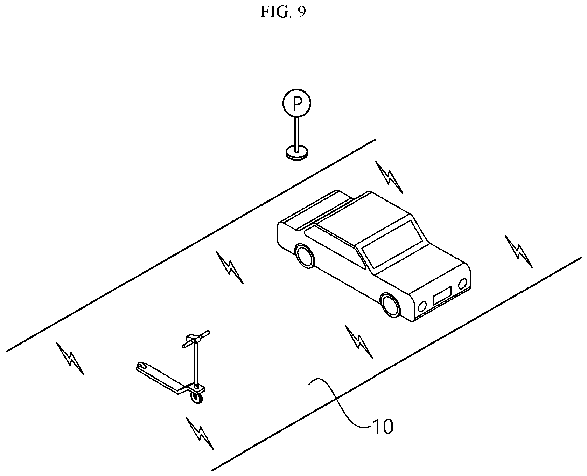

FIG. 9 is a diagram schematically illustrating that the wireless charging device is provided in a parking zone to charge a vehicle in the wireless charging device according to an embodiment of the present disclosure.

As illustrated in FIG. 9, the wireless charging device according to an embodiment of the present disclosure may be provided on a floor on which a vehicle is parked in a parking zone. That is, a wireless charging device to which multiple charging station blocks 10 are coupled may be provided on the floor of the parking zone. As a result, when an electric vehicle is parked on a floor equipped with the wireless charging device, power may be charged through the wireless charging device. In addition, not only vehicles but also vehicles that may be driven by electricity, such as electric kickboards and motorcycles, may be charged through the wireless charging device when parked on the floor equipped with the wireless charging device.

When the vehicle is a model that is disabled to be charged from the wireless charging device, power is supplied from the charging station block 10 through the charging assistance means 150 while a battery of the vehicle is connected to the charging assistance means 150 by wire to charge the vehicle.

Meanwhile, in the present disclosure, the control unit 130 may control the charging station block 10 variously.

Specifically, each of a plurality of charging station blocks 10 is connectable to an application or a program of a user by a method such as wired connection, Wi-Fi, Bluetooth, near field communication (NFC), telephone communication, etc., and it may be thus impossible to confirm a state of an entire coupled charging station block 10 or states of respective charging station blocks 10 in real time. In this case, names may be individually assigned to the respective charging station blocks 10.

In addition, according to a physical input of a user into the application, the program, or the charging station block 10 through a user terminal, the control unit 130 of each of the charging station blocks 10 controls the charging unit 100 to adjust an output amount of charging the apparatus or perform a transformation function, and may also individually turn on/off the respective charging station blocks 10.

In addition, in the wireless charging device in which multiple charging station blocks 10 are coupled, at least one charging station block 10 forms different operation groups, and according to the different operation groups, at least one of the output amount, output amplification, and a charging operation may be different. For example, if the total number of charging station blocks 10 is 6, three charging station blocks 10 may form each different operation group, and respective operation groups may operate differently in terms of the output amount, the output amplification, and the charging operation. In this case, a representative charging station block 10 among multiple charging station blocks 10 included in one operation group is arbitrarily set, and a control unit 130 of the representative charging station block 10 may control control units 130 of other charging station blocks 10. Here, in a state in which multiple charging station blocks 10 are coupled, the output amount may be amplified, and functions of simple power passage, dispersion, and distribution may also be performed.

Further, the plurality of charging station blocks 10 may include a sleep mode, a standby mode, a power saving mode, or a timer function by the control unit 130.

Further, the control unit 130 of the charging station block 10 may control the charging station block 10 based on big data and artificial intelligence in link with a memory device and a server in addition to the application and the program. Through this, it is possible to learn and utilize confirmation of the type and the state of an apparatus being charged, induction of a charging location which locates an apparatus in the charging unit 100, an output amount for optimal battery conservation and device preservation for each apparatus being charged, etc. Information related to such control may be stored and utilized in a memory, a server, an application, or a program of each device according to setting of the user.

Here, the induction of the charging location induces the user to locate the apparatus at a location of the charging unit 100 through the display unit 140.

As described above, the wireless charging device according to the present disclosure has an effect of enhancing the convenience of the user. In other words, customizing is possible which enlarges or reduces the wireless device according to needs of the user. Accordingly, the user can easily charge the device without additionally providing a separate device for wireless charging regardless of an apparatus owned thereby.

In addition, the charging station block 10 according to the present disclosure may receive and utilize power from an existing wireless charging device as it is. That is, the power receiving unit 120 of the charging station block 10 receives power from heterogeneous wireless charging devices, and the charging unit 100 charges an apparatus which the charging station block 10 is facing.

The preferred embodiment of the present disclosure is disclosed for the purpose of exemplification and it will be apparent to those skilled in the art that various modifications, additions, and substitutions are possible, without departing from the spirit and scope of the present disclosure as defined by the appended claims and the modifications, changes, and additions should be considered as falling within the claims of the present disclosure.

The wireless charging device according to the present disclosure has an effect of enhancing convenience of a user. In other words, customizing is possible which enlarges or reduces the wireless device according to needs of the user. Accordingly, the user can easily charge the device without additionally providing a separate device for wireless charging regardless of an apparatus owned thereby.

## Claims

1. A wireless charging device comprising:
a charging station block which is provided, on one side, with a charging unit and charges, via the charging unit, at least one apparatus that is in close contact with the charging station block or spaced a certain distance therefrom,
wherein the charging station block has at least one connection portion formed on one side, and a plurality of charging station blocks can be coupled to each other via the connection portion or decoupled from each other.

2. The wireless charging device of claim 1, wherein at least one connection portion is formed as at least one of magnetic coupling, a hook and locking ring form, a clip form, a jigsaw puzzle form, an insert coupling form, and a snap button-based fitting coupling form.

3. The wireless charging device of claim 1, wherein the charging station block is provided in a circular or polygonal shape in a plan view, and
the plurality of the charging station blocks can be coupled in the form of a right angle or a straight line through the connection portion.

4. The wireless charging device of claim 1, wherein in a state in which the plurality of charging station blocks are coupled, at least one charging station block forms different operation groups, and according to the different operation groups, at least one of the output amount, output amplification, and a charging operation is different.

5. The wireless charging device of claim 1, wherein the charging station block further includes a control unit controlling the charging unit therein, and
the control unit learns apparatus information on at least one apparatus, and
the type and the state of at least one apparatus when at least one is charged, state confirmation, induction of a charging location which locates an apparatus in the charging unit, and an output amount of optimal battery conservation and device preservation is controlled based on the learning.

6. The wireless charging device of claim 5, wherein the control unit adjusts an output amount for charging an apparatus by controlling the charging units provided in the plurality of charging station blocks, and individually turns on/off the plurality of charging station blocks.

7. The wireless charging device of claim 6, further comprising:
a voice recognition unit provided on one side of the inside or outside of the charging station block, and recognizing a voice,
wherein the voice recognition unit recognizes the voice of the user, and determines the control of the charging station block requested by the user, and transfers the determined control to the control unit.

8. The wireless charging device of claim 1, wherein the plurality of charging station blocks are coupled, and provided on a wall or a floor of a predetermined space, and
apparatuses positioned inside the predetermined space are wirelessly charged.

9. The wireless charging device of claim 8, wherein the predetermined space is a building,
the charging station block is installed or buried in at least one of the wall and the floor of the building, and
the charging station block wirelessly charges apparatuses positioned therein.

10. The wireless charging device of claim 8, wherein the predetermined space is a parking lot,
the charging station block is installed or buried in at least one of the wall and the floor of the parking lot, and
the charging station block wirelessly charges apparatuses positioned therein.

11. The wireless charging device of claim 1, wherein a charging assistance means is coupled to one side of the charging station block, and
the charging assistance means holds an apparatus charged by the charging station block or expands an area capable of charging the apparatus.

12. The wireless charging device of claim 1, further comprising:
a display unit displaying an operation of the charging station block on one side of the charging station block,
wherein the display unit displays whether at least one charging station block is abnormal in the state in which the plurality of charging station blocks are coupled, and
wherein the charging station block is connected to a user terminal by wire or wirelessly, and the display unit adjusts an output displayed by the display unit based on the control of the user terminal.

13. The wireless charging device of claim 1, further comprising:
a sound output unit provided on one side of the inside or outside of the charging station block, and notifying charging or an abnormal operation of the charging station block by outputting a sound,
wherein the sound output unit differently adjusts the type of sound or a pattern of the sound by external control.

14. The wireless charging device of claim 1, further comprising:
a location confirmation unit provided on one side of the inside or outside of the charging station block,
wherein the location confirmation unit transmits location information of the charging station to the user terminal connected to the charging station block to confirm the location of the charging station block in the user terminal.

15. The wireless charging device of claim 1, wherein a power reception unit provided in the charging station block receives power from heterogeneous wireless charging devices, and
the charging unit charges an apparatus which the charging station block is facing with the received power.
